# EUROPÄISCHE PATENTANMELDUNG

(11) **EP 2 602 496 A1**
(43) Veröffentlichungstag der Anmeldung: **12.06.2013**
(21) Anmeldenummer: 11191964.3
(22) Anmeldetag: 05.12.2011
(51) Int. Cl.: F16C 3/02, F16L 13/00

(54) **Verbindung zwischen zwei Bauteilen und Verfahren zur Verbindung zweier Bauteile**

(71) Anmelder: Magna Steyr Fahrzeugtechnik AG & Co KG, 8041 Graz (AT)
(72) Erfinder: Pretzler, Andrea, 8611 St. Katharein/Lmg (AT); Dietz, Wolfgang, 8081 Pirching (AT); Auer, Thomas, 9363 Metnitz (AT); Krammer, Christoph, 8530 Deutschlandsberg (AT)
(74) Vertreter: Rausch, Gabriele

(57) **Zusammenfassung**

Verbindung zwischen zwei Bauteilen (1, 2), wobei die beiden Bauteile (1, 2) Steckabschnitte mit Profilen aufweisen, die ineinander steckbar sind, wobei die Steckabschnitte der beiden Bauteile (1, 2) in einem Überlappungsbereich (d1) ineinander gesteckt sind und ein Wickelbereich (d2) der beiden Bauteile (1, 2), der mindestens teilweise mit dem Überlappungsbereich (d1) zusammenfällt, mit einer Wicklung (3) aus faserverstärktem Kunststoff umwickelt ist und Verfahren zur Verbindung zweier Bauteile.

## Beschreibung

Die vorliegende Erfindung betrifft eine Verbindung zwischen zwei Bauteilen, wobei die beiden Bauteile Steckabschnitte mit Profilen aufweisen, die ineinander steckbar sind und ein Verfahren zur Verbindung zweier Bauteile, wobei die beiden Bauteile Steckabschnitte mit Profilen aufweisen, die ineinander steckbar sind.

Das einfache Ineinanderstecken von derartigen Bauteilen reicht oft nicht aus um eine stabile Verbindung herzustellen, daher ist es beispielsweise bekannt die Verbindungsbereiche zusätzlich zu kleben, zu verschweißen, zu nieten oder zu verschrauben. Insbesondere wenn eines der beiden Bauteile aus faserverstärktem Kunststoff besteht und das weitere Bauteil entweder ebenfalls aus faserverstärktem Kunststoff oder auch aus einem anderen Material hergestellt ist, wurden auch andere Verbindungsmethoden, wie die Verwendung von Inserts oder Flanschen als Verbindungselemente vorgeschlagen. Hierdurch werden jedoch separat vorgefertigte Verbindungselemente benötigt. Vor allem wenn die beiden Bauteile oder Bauteile und Verbindungselemente aus unterschiedlichen Materialien bestehen sind die genannten Verbindungen oft unzureichend, da es zu unterschiedlichem Wärmeausdehnungsverhalten und unterschiedlicher Korrosion der Bauteile kommt.

Ein Verfahren zur Verbindung zweier Stabenden aus faserverstärktem Kunststoff ist beispielsweise aus der DE 3508644 A1 bekannt. Bei diesem Verfahren werden die Enden der zu verbindenden Stäbe abgeschrägt und hierauf fluchtgerecht miteinander verklebt.

Die EP 0 059 163 A1 offenbart eine Verbindung zwischen einer Hohlwelle aus faserverstärktem Kunststoff und einem Metallelement, wobei das Metallelement einen inneren Ring aufweist, der innen an der Wand der Hohlwelle anliegt und ein weiterer Metallring als äußerer Ring verwendet wird, so dass die Hohlwelle aus faserverstärktem Kunststoff zwischen den beiden Metallringen eingespannt ist. Die Verbindung wird hergestellt indem zuerst der äußere der beiden Ringe auf die Welle und dann diese zusammen mit dem äußerem Ring auf den inneren Ring thermisch aufgeschrumpft werden.

Die bekannten Verbindungen sind somit teils wenig zuverlässig und andererseits komplex und aufwändig in der Herstellung.

Es ist eine Aufgabe der Erfindung, Verbindungen zwischen zwei Bauteilen der genannten Art in dieser Hinsicht zu verbessern und insbesondere eine effiziente und einfach herzustellende Verbindung anzugeben. Weiters ist es eine Aufgabe der Erfindung ein Verfahren zur Verbindung zweier Bauteile der genannten Art anzugeben.

Die Lösung der Aufgabe erfolgt durch eine Verbindung zwischen zwei Bauteilen, wobei die beiden Bauteile Steckabschnitte mit Profilen aufweisen, die ineinander steckbar sind, wobei die Steckabschnitte der beiden Bauteile in einem Überlappungsbereich ineinander gesteckt sind und ein Wickelbereich der beiden Bauteile, der mindestens teilweise mit dem Überlappungsbereich zusammenfällt, mit einer Wicklung aus faserverstärktem Kunststoff umwickelt ist.

Weiters erfolgt die Lösung der erfindungsgemäßen Aufgabe mit einem Verfahren zur Verbindung zweier Bauteile, wobei die beiden Bauteile Steckabschnitte mit Profilen aufweisen, die ineinander steckbar sind, umfassend die Verfahrensschritte
- Ineinanderstecken der beiden Steckabschnitte der beiden Bauteile in einem Überlappungsbereich
- Umwickeln eines Wickelbereiches der beiden Bauteile, der mindestens teilweise mit dem Überlappungsbereich zusammenfällt, mit einer Wicklung umfassend Fasermaterial
- Aushärten eines Matrix-Materials der Wicklung in einem Werkzeug.

Die beiden Bauteile sind also erfindungsgemäß an deren Steckabschnitten ineinandergesteckt. Damit die Steckabschnitte ineinander steckbar sind, müssen beide Bauteile ähnliche Profile mit ähnlichen Dimensionen, beispielsweise ähnlichen Durchmessern, aufweisen, die vorzugsweise als geschlossene runde, rechteckige oder quadratische Profile ausgeführt sein können. Weiters sind die beiden Bauteile mit faserverstärktem Kunststoff umwickelt, wobei der Bereich der Wicklung zumindest teilweise in dem Abschnitt der Bauteile liegt, in dem sich die Profile auch überlappen. Bevorzugt ist zumindest der gesamte Überlappungsbereich auch umwickelt.

Das Fasermaterial des faserverstärkten Kunststoffes kann dabei vorteilhaft aus anorganischen oder organischen Verstärkungsfasern bestehen, wie zum Beispiel aus Glasfasern, Kevlarfasern, Aramidfasern, Carbonfasern, Pflanzenfasern, Gesteinsfasern oder Gemische derselben, welche beispielsweise in Form von Fasersträngen, Fasergeweben, Fasergeflechten, Fasergestricken und/oder Faservliesen vorliegen.

Das Matrix-Material des faserverstärkten Kunststoffes kann eine duroplastische oder auch thermoplastische Matrix sein, wie zum Beispiel Polypropylen, Polyphenylensulfid, Polyetheretherketon, Polyesterharz oder Epoxidharz oder auch eine elastomere Matrix wie Gummi oder Polyurethan.

Weiterbildungen der Erfindung sind in den abhängigen Ansprüchen, der Beschreibung sowie den beigefügten Zeichnungen angegeben.

Bevorzugt erstreckt sich der Wickelbereich einer erfindungsgemäßen Verbindung über den gesamten Überlappungsbereich und reicht vorzugsweise beiderseits über den Überlappungsbereich hinaus. Auf diese Weise wird eine ausreichende Wicklung mit Fasermaterial erzielt, so dass eine stabile kraftschlüssige Verbindung gewährleistet ist.

In einer Ausführungsform können die beiden Bauteile aus unterschiedlichen Materialien bestehen.

Beispielsweise ist die erfindungsgemäße Verbindung vorteilhaft einsetzbar wenn zumindest einer der beiden Bauteile aus faserverstärktem Kunststoff besteht. Besonders bevorzugt bestehen beide Bauteile aus faserverstärktem Kunststoff. Da sowohl eines oder beide Bauteile als auch die Wicklung aus faserverstärktem Kunststoff bestehen, werden Probleme mit unterschiedlichen Werkstoffen, wie unterschiedliche Wärmeausdehnungen und Kontaktkorrosion vermieden.

In einer bevorzugten Ausgestaltung der Verbindung weist zumindest einer der beiden Bauteile im Wickelbereich zumindest eine Ausformung auf, so dass die Wicklung aus faserverstärktem Kunststoff formschlüssig mit der Ausformung verbunden ist. Dadurch wird zusätzlich zur kraftschlüssigen Kraftkomponente auch ein stabiler Formschluss erreicht, durch den insbesondere ein axiales Herausgleiten entlang der Achse des Ineinandersteckens der beiden Bauteile vermieden wird.

Dabei ist die zumindest eine Ausformung bevorzugt eine in Umfangsrichtung des geschlossenen Profils des zumindest einen Bauteils umlaufende Verjüngung, Abstufung oder Nut.

Zur Herstellung einer erfindungsgemäßen Verbindung dient das erwähnte erfindungsgemäße Verfahren das zumindest folgende Schritte umfasst:
- Ineinanderstecken der beiden Steckabschnitte der beiden Bauteile in einem Überlappungsbereich
- Umwickeln eines Wickelbereiches der beiden Bauteile, der mindestens teilweise mit dem Überlappungsbereich zusammenfällt, mit einer Wicklung umfassend Fasermaterial
- Aushärten eines Matrix-Materials der Wicklung in einem Werkzeug.

Dabei kann die Wicklung, die Fasermaterial umfasst, zum Zeitpunkt des Umwickelns bereits das Matrix-Material enthalten, also als vorimprägniertes Halbzeug (sog. Prepregs) ausgebildet sein. Dadurch ist es nicht erforderlich zu einem späteren Zeitpunkt der Wicklung Matrix-Material beizugeben.

In einer Ausführungsform des Verfahrens zur Verbindung zweier Bauteile ist die Wicklung zum Zeitpunkt des Umwickelns ein trockenes Fasermaterial ohne Matrix-Material. Nach dem Umwickeln der Bauteile wird in diesem Fall ein Matrix-Material in das Fasermaterial eingebracht.

Bevorzugt wird das Matrix-Material nach dem Umwickeln in einem Werkzeug in das Fasermaterial injiziert oder eingegossen.

Die Erfindung wird im Folgenden beispielhaft unter Bezugnahme auf die Zeichnungen beschrieben.
- Fig. 1: ist eine 3D-Dartsellung eines ersten Schrittes eines erfindungsgemäßen Verfahrens.
- Fig. 2: ist eine 3D-Dartsellung eines zweiten Schrittes eines erfindungsgemäßen Verfahrens.
- Fig. 3: ist eine 3D-Dartsellung eines dritten Schrittes eines erfindungsgemäßen Verfahrens.
- Fig. 4: ist eine 3D-Dartsellung einer erfindungsgemäßen Verbindung zwischen zwei Bauteilen.

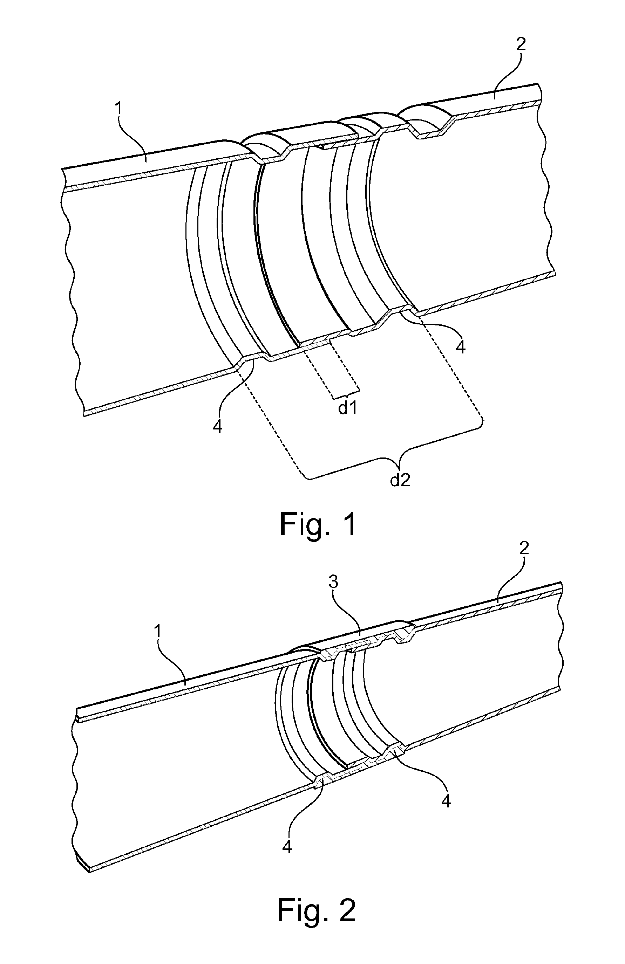

In den Fig. 1-3 ist ein erfindungsgemäßes Verfahren zur Verbindung zweier Bauteile 1 und 2 dargestellt, wobei die beiden Bauteile 1 und 2 Steckabschnitte aufweisen, die ineinander steckbar sind. Die Bauteile können dabei eigens ausgeformte Steckabschnitte aufweisen oder auch, wie in den Figuren dargestellt, zur Gänze so ausgebildet sein, dass sie ineinander steckbar sind.

Fig. 1 zeigt dabei den ersten Verfahrensschritt, in dem die beiden Steckabschnitte der beiden Bauteile 1 und 2 in einem Überlappungsbereich d 1 ineinander gesteckt werden. Der Überlappungsbereich d 1 ist in Richtung des Ineinandersteckens kleiner als der vorgesehene Wickelbereich d2 und stellt einen Teilbereich des Wickelbereichs d2 dar. An beiden Bauteilen 1 und 2 sind um die Profile der Steckabschnitte umlaufende Ausformungen 4 ausgebildet, die als Nuten mit schrägen Wänden ausgeführt sind. Die Nuten liegen bei beiden Bauteilen 1 und 2 außerhalb des Überlappungsbereiches d1, jedoch innerhalb des Wickelbereiches d2.

In Fig. 2 ist ein weiterer Verfahrensschritt dargestellt, in dem der Wickelbereich der beiden Bauteile 1 und 2 mit einer Wicklung 3 aus Fasermaterial umwickelt ist. Die Wicklung 3 kann dabei aus bereits vorimprägnierten oder auch aus trockenen Fasern ohne Matrix-Material bestehen. Die Wicklung 3 kommt dabei auch innerhalb der Ausformungen 4 der beiden Bauteile 1 und 2 zu liegen.

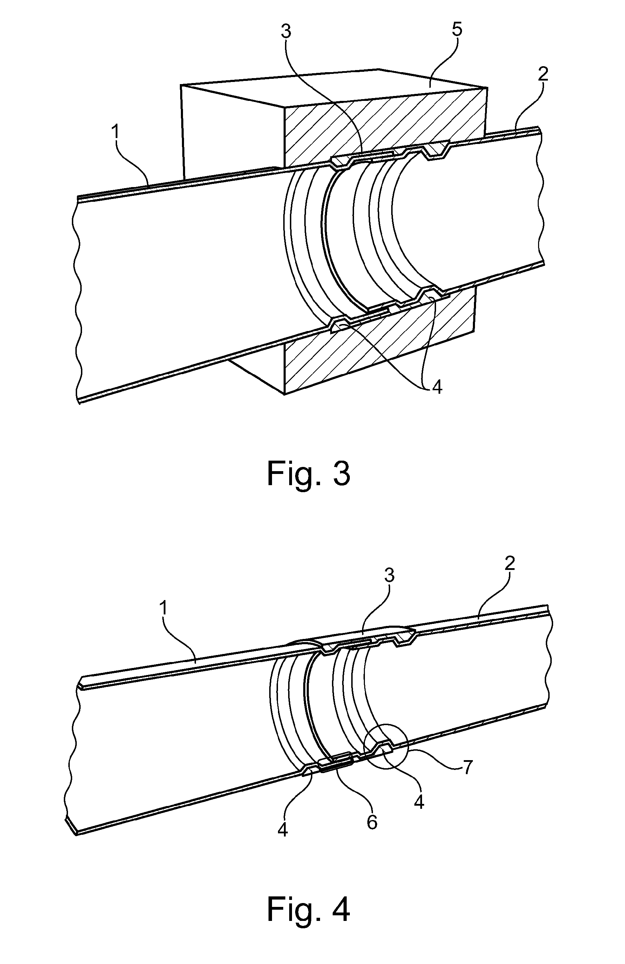

Wie in Fig. 3 dargestellt wird nach dem Aufbringen der Wicklung 3 zumindest der Verbindungsbereich der beiden Bauteile 1 und 2 in ein Werkzeug 5 eingelegt. In die Wicklung 3 kann erforderlichenfalls im Werkzeug 5 noch eine Kunststoff-Matrix injiziert werden. Der faserverstärkte Kunststoff härtet im Werkzeug 5 in bekannter Weise aus, beispielsweise auf chemischem Weg. Anschließend kann der fertiggestellte Verbund aus Bauteil 1, Bauteil 2 und Wicklung 3 aus dem Werkzeug 5 entnommen werden.

Fig. 4 stellt erfindungsgemäß miteinander verbundene Bauteile 1 und 2 dar, die in einem Überlappungsbereich ineinander gesteckt sind, und in einem Wickelbereich mit einer bereits ausgehärteten Wicklung 3 aus faserverstärktem Kunststoff bedeckt sind. Im Überlappungsbereich kommt es dabei zur Ausbildung einer Zone 6 mit kraftschlüssiger Verbindung zwischen den beiden Bauteilen 1 und 2 und zur Ausbildung von Zonen 7 mit formschlüssiger Verbindung zwischen den Ausnehmungen 4 der Bauteile 1 und 2 und der Wicklung 3.

Die Erfindung ermöglicht somit eine einfache und zuverlässige Verbindung zwischen zwei Bauteilen.

### Bezugszeichenliste

- 1: erster Bauteil
- 2: zweiter Bauteil
- 3: Wicklung
- 4: Ausformung
- 5: Werkzeug
- 6: Zone mit kraftschlüssiger Verbindung
- 7: Zone mit formschlüssiger Verbindung

- d1: Überlappungsbereich
- d2: Wickelbereich

## Patentansprüche

1. Verbindung zwischen zwei Bauteilen (1, 2), wobei die beiden Bauteile (1, 2) Steckabschnitte mit Profilen aufweisen, die ineinander steckbar sind,
**dadurch gekennzeichnet, dass** die Steckabschnitte der beiden Bauteile (1, 2) in einem Überlappungsbereich (d1) ineinander gesteckt sind und ein Wickelbereich (d2) der beiden Bauteile (1, 2), der mindestens teilweise mit dem Überlappungsbereich (d1) zusammenfällt, mit einer Wicklung (3) aus faserverstärktem Kunststoff umwickelt ist.

2. Verbindung nach Anspruch 1,
**dadurch gekennzeichnet, dass** der Wickelbereich (d2) sich über den gesamten Überlappungsbereich (d1) erstreckt und vorzugsweise beiderseits über den Überlappungsbereich (d1) hinausreicht.

3. Verbindung nach Anspruch 1,
**dadurch gekennzeichnet, dass** die beiden Bauteile (1, 2) aus unterschiedlichen Materialien bestehen.

4. Verbindung nach Anspruch 1,
**dadurch gekennzeichnet, dass** zumindest einer der beiden Bauteile (1, 2), bevorzugt beide Bauteile (1, 2) aus faserverstärktem Kunststoff bestehen.

5. Verbindung nach Anspruch 1,
**dadurch gekennzeichnet , dass** zumindest einer der beiden Bauteile (1, 2) im Wickelbereich (d2) zumindest eine Ausformung (4) aufweist, so dass die Wicklung (3) aus faserverstärktem Kunststoff formschlüssig mit der Ausformung (4) verbunden ist.

6. Verbindung nach Anspruch 5,
**dadurch gekennzeichnet , dass** die zumindest eine Ausformung (4) eine in Umfangsrichtung des geschlossenen Profils des zumindest einen Bauteils (1, 2) umlaufende Verjüngung, Abstufung oder Nut ist.

7. Verfahren zur Verbindung zweier Bauteile (1, 2), wobei die beiden Bauteile (1, 2) Steckabschnitte mit Profilen aufweisen, die ineinander steckbar sind,
**gekennzeichnet durch** die Verfahrensschritte
- Ineinanderstecken der beiden Steckabschnitte der beiden Bauteile (1, 2) in einem Überlappungsbereich (d1)
- Umwickeln eines Wickelbereiches (d2) der beiden Bauteile (1, 2), der mindestens teilweise mit dem Überlappungsbereich (d1) zusammenfällt, mit einer Wicklung (3) umfassend Fasermaterial
- Aushärten eines Matrix-Materials der Wicklung (3) in einem Werkzeug (5).

8. Verfahren zur Verbindung zweier Bauteile (1, 2) nach Anspruch 7, **gekennzeichnet dadurch , dass** die Wicklung (3) zum Zeitpunkt des Umwickelns bereits das Matrix-Material enthält, also als vorimprägniertes Halbzeug ausgebildet ist.

9. Verfahren zur Verbindung zweier Bauteile (1, 2) nach Anspruch 7, **gekennzeichnet dadurch , dass** die Wicklung (3) zum Zeitpunkt des Umwickelns ein trockenes Fasermaterial ohne Matrix-Material ist und das nach dem Umwickeln ein Matrix-Material in das Fasermaterial eingebracht wird.

10. Verfahren zur Verbindung zweier Bauteile (1, 2) nach Anspruch 9, **gekennzeichnet dadurch , dass** das Matrix-Material nach dem Umwickeln in einem Werkzeug (5) in das Fasermaterial injiziert oder eingegossen wird.
